# EUROPEAN PATENT APPLICATION

(11) **EP 2 291 013 A1**
(43) Date of publication of application: **02.03.2011**
(21) Application number: 09771925.6
(22) Date of filing: 29.04.2009
(51) Int. Cl.: H04W 8/00

(54) **METHOD AND MESSAGE CENTER FOR REALIZING A DYNAMIC PAYING OF A MESSAGE**

(30) Priority: 30.06.2008 CN 200810125280
(71) Applicant: Huawei Technologies Co., Ltd., Longgang District, Shenzhen Guangdong 518129 (CN)
(72) Inventor: LI, Xinjie, 518129 Shenzhen (CN); WU, Yunzhi, 518129 Shenzhen (CN)
(74) Representative: Kreuz, Georg Maria
(86) International application number: PCT/CN2009/071550
(87) International publication number: WO 2010/000155

(57) **Abstract**

A method and a message center for implementing dynamic payment for a message are provided. The method for implementing dynamic payment for a message includes receiving a message that carries an identifier indicating that a specified payer pays for the message; identifying the message as a message paid by the specified payer according to the identifier; sending the message to a receiver, and informing deducting the charge of the message from the specified payer. Through the technical solutions, the message center may identify the message as a message paid by the specified payer according to the identifier carried in the message, and deduct the charge of the message from the specified payer, thus achieving dynamic payment in the message service.

## Description

The application claims priority to Chinese Patent Application No. 200810125280.3, filed with the Chinese Patent Office on June 30, 2008 and entitled "METHOD AND MESSAGE CENTER FOR IMPLEMENTING DYNAMIC PAYMENT FOR MESSAGE", which is incorporated herein by reference in its entirety.

### FIELD OF THE INVENTION

The present invention relates to the filed of mobile communication technology, and in particular, to a method and a message center for implementing dynamic payment for a message.

### BACKGROUND OF THE INVENTION

With the development of the mobile communication technology, users use the short message service (SMS) to communicate frequently. The existing payment mode of a short message system mainly includes a sender-paying mode (that is, a caller-paying mode) and a mode of shared payment by a sender and a receiver (that is, a mode of shared payment by a calling party and a called party). The charge is collected through a telephone bill.

However, in some special conditions, a user hopes a short message paid by a receiver (that is, hopes that a message is paid by a called party).

For example, if a user A needs to send an important or an emergent short message to a user B and the user A has insufficient balance, the user A can only receive short messages but cannot send the short message to the user B. In such case, the user A hopes that the short message can be paid by the receiver (the user B).

For another example, a company promotes a business through a short message. They send the short message to users, and hope the users to reply to confirm whether to accept the business after they receive the short message. However, because the users need to pay for replying to the short message, they are reluctant to reply. Therefore, the company hopes that it pays for the users' replied messages.

The prior art has the following problems. According to the technical solutions provided by the prior art, a message payer cannot be dynamically selected, so the users' requirement cannot be satisfied, and the development of the message service is impeded.

### SUMMARY OF THE INVENTION

Accordingly, the present invention is directed to a method and a message center for implementing dynamic payment for a message, so as to achieve dynamic payment in the message service.

According to the first aspect of the present invention a method for implementing dynamic payment for a message includes:
receiving a message, where the message carries an identifier indicating that a specified payer pays for the message;
identifying the message as a message paid by the specified payer according to the identifier; and
sending the message to a receiver, and informing deducting the charge of the message from the specified payer.

According to the second aspect of the present invention a message center includes:
a receiving unit, configured to receive a message, where the message carries an identifier indicating that a specified payer pays for the message;
an identifying unit, configured to identify the message as a message paid by the specified payer according to the identifier received by the receiving unit;
a sending unit, configured to send the message paid by the specified payer and received by the receiving unit to a receiver according to a receiver number of the message; and
a charge deduction informing unit, configured to inform deducting the charge of the message sent by the sending unit from the specified payer according to the message identified by the identifying unit as the message paid by the specified payer.

Persons of ordinary skill in the art may understand that all or part of the steps of the method according to the present invention may be implemented by a program instructing relevant hardware. The program may be stored in a computer readable storage medium, such as a Read-Only Memory (ROM), a Random Access Memory (RAM), a magnetic disk, or an optical disk.

Through the method and the message center for implementing dynamic payment for a message provided by the present invention, the message center identifies a message paid by the specified payer according to an identifier in the message, and deducts the charge of the message from the specified payer, thus achieving dynamic payment in the message service.

### BRIEF DESCRIPTION OF THE DRAWINGS

To illustrate the embodiments of the present invention more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG. 1 is a signaling flow chart of a method for implementing dynamic payment for a message according to an embodiment of the present invention;
FIG. 2 is a signaling flow chart of a method for implementing dynamic payment for a message according to another embodiment of the present invention;
FIG. 3 is a signaling flow chart of a method for implementing dynamic payment for a message according to still another embodiment of the present invention; and
FIG. 4 is a schematic structural view of a message center according to an embodiment of the present invention.

### DETAILED DESCRIPTION OF THE EMBODIMENTS

To make the objectives, technical solutions and advantages of the present invention clearer, a detailed description of the present invention is provided below with reference to the accompanying drawings and embodiments. It should be understood that the detailed description of the embodiments is merely used to explain the present invention not to limit the present invention.

The present invention provides a method for implementing dynamic payment for a message. A sender may specify in a sent message that the sent message is paid by a specified payer, and the message carries an identifier of the specified payer, so a network side deducts the charge from the specified payer after receiving the message. A detailed process includes: receiving a message that carries an identifier indicating that a specified payer pays for the message; identifying the message as a message paid by the specified payer according to the identifier; and sending the message to a receiver, and informing deducting the charge of the message from the specified payer.

The sender may specify the receiver as the payer or a third party to pay for the message.

A detailed method for carrying the identifier indicating that a specified payer pays for the message in the message includes:
using combination of a service access code indicating that the message needs to be paid by the specified payer, an identifier of the specified payer, and a receiver identifier as a called number of the message; or
adding a prefix indicating that a specified payer pays for the message in the message content, where the prefix includes the identifier of the specified payer.

When the specified payer is the receiver, the identifier indicating that a specified payer pays for the message may not include the identifier of the specified payer. That is, when the identifier indicating that a specified payer pays for the message is carried, a service access code indicating that the message needs to be paid by the receiver and the receiver identifier are directly combined as the called number or a prefix indicating that the message needs to be paid by the receiver is directly added in the message content.

The message in the embodiment of the present invention may be a short message or a multimedia message. The following takes an embodiment that the specified payer is the receiver or the third party as an example to illustrate.

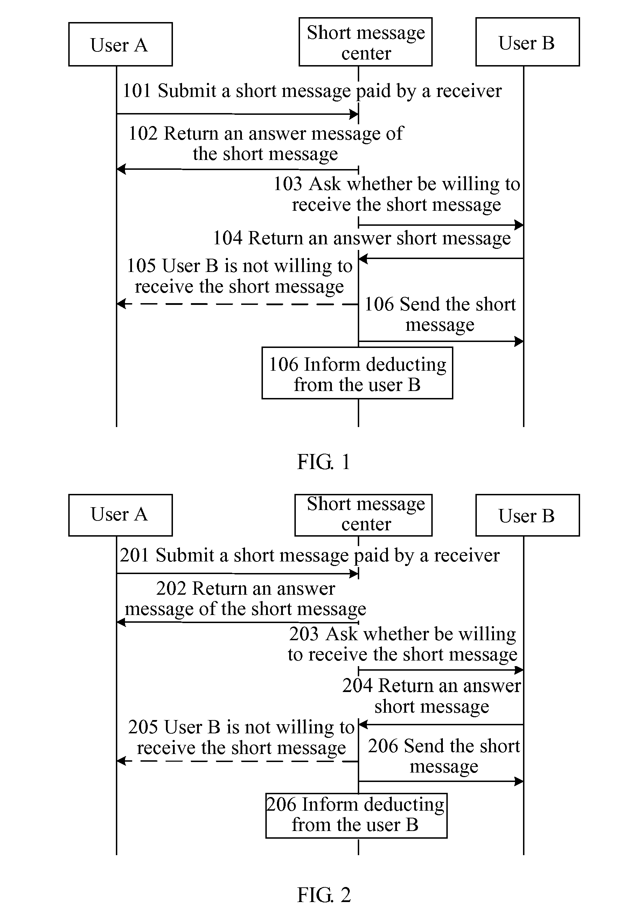

Referring to FIG. 1, a signaling flow chart of a method and a system for implementing dynamic payment for a message according to an embodiment of the present invention is shown. In this embodiment, the specified payer is the receiver, that is, a user A sends a short message to a user B, and the user B pays for the short message.

A detailed process for implementing dynamic payment for the message includes the following steps:
In step 101, a calling party (the user A) submits a short message paid by the receiver to a short message center, in which the short message carries an identifier for indicating that the receiver pays for the short message.

A detailed method for carrying the identifier for indicating that the receiver pays for the short message in the short message includes:
using combination of a service access code and a receiver number as a called number; or
adding a prefix indicating that the short message needs to be paid by the receiver in the message content.

In this embodiment, the detailed method for carrying the identifier for indicating that the receiver pays for the short message in the short message includes:
using combination of the service access code indicating that the short message needs to be paid by the receiver and the receiver number (the user B's number) as the called number of the short message.

The service access code is used to identify a receiver-paying short message service. The service access code may be defined by an operator, and composed by numerals.

For example, the service access code of the receiver-paying short message service may be 800. Therefore, when the user A sends a short message paid by the receiver, the called number of the short message is 80013900011234, indicating that the short message sent to the user B (the number of the user B is 13900011234) is paid by the receiver (that is, the user B).

In step 102, after a short message center receives the short message paid by the receiver, the short message center identifies the short message as a short message paid by the receiver according to the service access code, saves the short message paid by the receiver, and then returns an answer to the user A.

In step 103, the short message center asks whether the user B is willing to receive the short message paid by the receiver according to the service access code and the receiver number carried in the called number.

The detailed process further includes the following steps:
In step A, according to the service access code and the receiver number, the short message center generates an inquiry short message for the short message paid by the receiver, and generates a temporary address to be a source address of the inquiry short message. The source address is used to identify an inquiry task of the message paid by the receiver.
In step B, the short message center uses the temporary address to send the user B the inquiry short message, where a calling number carried in the inquiry short message includes the service access code and the user A's number.

The content and format of the inquiry short message may be determined by an operator, and mainly include the calling number and charge of the short message. For example, the content of the inquiry short message may be "whether be willing to accept a short message paid by receiver (the charge of the short message is $1) sent by the user A? Please answer 1 for agreement or 2 for disagreement (the replied short message is free)."

In step 104, the user B sends the short message center an answer short message for accepting or not accepting the short message paid by the receiver, and if the answer short message shows the acceptance of the short message paid by the receiver, step 106 is performed; otherwise, step 105 is performed.

A target address of the answer message sending by the user B to the short message center is the temporary address generated by the short message center, and therefore, the short message center may recognize that the answer short message is the replied short message of the receiver-paying short message service according to the temporary address, and does not charge for the answer short message.

In step 105, the short message center sends the use A a prompt message about the user B's unwillingness to accept the short message paid by the receiver, and deletes the short message saved paid by the receiver in the short message center.

In step 106, the short message center finds the corresponding short message paid by the receiver according to the service access code and the receiver number, sends the user B the short message paid by the receiver, and then informs deducting the charge of the short message from the user B.

The process of informing deducting the charge of the short message from the user B is similar to the process of informing deducting the charge of the short message in the prior art, thus further descriptions do not make herein again.

The preceding method for implementing dynamic payment for a message provided in the embodiment of the present invention is not only applicable to the short message but also applicable to a multimedia message. When applying to the multimedia message, a processing of a multimedia message center is similar to the processing of the short message center of the embodiment in the present invention, and thus the details do not repeat herein again.

Moreover, the implementation for the multimedia message center asking whether the user B is willing to accept the short message paid by the receiver sent by the user A may have the following two methods:
1. the multimedia message center sends the user B an inquiry message; and
2. the multimedia message center sends the user B a multimedia informing message that carries the inquiry message.

Referring to FIG. 2, a signaling flow chart of a method for implementing dynamic payment for a message according to another embodiment of the present invention is shown. In this embodiment, the specified payer is a third party, that is, a user A sends a short message to a user C, and the third party (a user B) pays for the short message.

The detailed process for realizing dynamic payment for the message includes the following steps:

In step 201, a calling party (the user A) submits a short message paid by the third party (the user B) to a short message center, where the short message carries an identifier for indicating that the third party pays for the short message and an identifier of the receiver (the user C).

A detailed method for carrying the identifier for indicating that the third party pays for the short message and the identifier of the receiver includes:
using combination of the service access code indicating that the short message needs to be paid by the third part, the third party number, and the receiver number as a called number; or
adding a prefix indicating that the third party pays for the short message in the message content, where the prefix indicating that the third party pays for the short message includes the third party number.

In this embodiment, the detailed method for identifier for indicating that the third party pays for the short message carried by the short message includes:
using combination of the service access code, the third party number (the user B's number), and the receiver number (the user C's number) as the called number.

The service access code is used to identify a third party-paying short message service. The service access code may be defined by an operator, and composed by numerals.

For example, the service access code of the third party-paying short message service may be 801. Therefore, when the user A sends a short message paid by a third party, the called number of the short message is 80113900011234#13900015678, indicating sending the short message paid by the third party (the third party is the user B and the number of the user B is 13900015678) to the receiver (that is, the user C, and the number of the user C is 13900011234).

In step 202, after the short message center receives the short message paid by the third party, the short message center identifies the short message as a short message paid by the third party according to the service access code, saves the short message paid by the third party, and then returns an answer to the user A.

In step 203, the short message center asks whether the third party (the user B) is willing to pay for the short message paid by the third party sent by the sender (the user A) according to the service access code and the receiver number carried in the called number.

The detailed process further includes the following steps:
In step A, according to the service access code and the third party number, the short message center generates an inquiry short message for the short message paid by the third party, and generates a temporary address to be a source address of the inquiry short message. The source address is used to identify an inquiry task of the message paid by the third party.
In step B, the short message center uses the temporary address to send the third party (the user B) the inquiry short message, where a calling number carried in the inquiry short message includes the service access code and the user A's number.

The content and format of the inquiry short may be determined by an operator and mainly include the calling number and a charge of a short message. For example, the content of the inquiry short message may be "whether be willing to accept a short message paid by the third party (the charge of the short message is $1) sent by the user A? Please answer 1 for agreement or 2 for disagreement (the replied short message is free)."

In step 204, the user B sends the short message center an answer short message for accepting or not accepting the short message paid by the third party sent by the user A, and if the answer short message shows the willingness, step 206 is performed; otherwise, step 205 is performed.

A target address of the answer message sending by the user B to the short message center is the temporary address generated by the short message center, and therefore, the short message center may recognize that the answer short message is the replied short message of the third party-paying short message service according to the temporary address, and does not charge for the answer short message.

In step 205, the short message center sends the use A a prompt message about the user B's unwillingness to pay for the short message paid by the third party sent by the user A and deletes the short message paid by the third party saved in the short message center.

In step 206, the short message center finds a corresponding short message paid by the third party according to the service access code and the receiver number, sends the user C the short message paid by the third party, and then informs deducting the charge of the short message from the user B.

The process of informing deducting the charge of the short message from the user B is similar to the process of informing deducting the charge of the short message in the prior art, so that further descriptions are not made herein again.

The preceding method for implementing dynamic payment for a message provided by the embodiment of the present invention is not only applicable to the short message but also applicable to a multimedia message. When applying to the multimedia message, a processing of a multimedia message center is similar to the processing of the short message center of the embodiment in the present invention, and thus the details are not repeated herein again.

Moreover, the implementation for the multimedia message center asking whether the user B is willing to pay for the short message paid by the third party sent by the user A may has the following two methods:
1. the multimedia message center sends the user B an inquiry message; and
2. the multimedia message center sends the user B a multimedia informing message that carries the inquiry message.

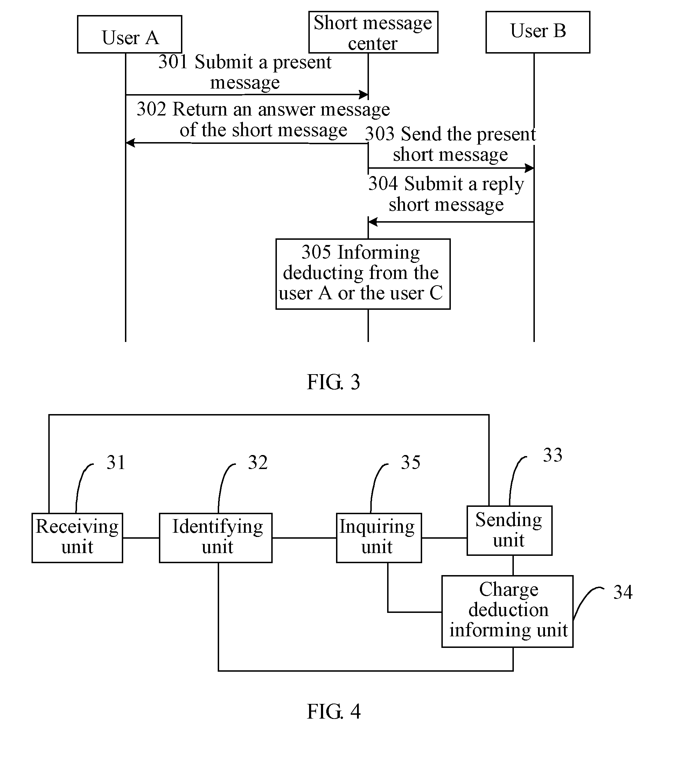

Referring to FIG. 3, a signaling flow chart of a method for implementing dynamic payment for a message according to still another embodiment of the present invention is shown. In this embodiment, when a user A submits a present short message, the user A specifies that the reply short message corresponding to the present short message is paid by a receiver of the reply short message, that is, if a user B replies the user A's a short message, the receiver (the user A) pays for the reply short message.

The detailed process for implementing dynamic payment for a message includes the following steps:
In step 301, a calling party (the user A) submits to the short message center a present short message (that is, a reply short message corresponding to the present short message is paid by the receiver), where the present short message carries an identifier indicating that the reply short message corresponding to the present short message is paid by the receiver of the reply short message.

A detailed method for the short message carrying the identifier indicating that the reply short message corresponding to the present short message is paid by the receiver of the reply short message includes:
using combination of a service access code indicating that the reply short message corresponding to the present short message is paid by the receiver of the reply short message and a receiver number as a called number; or
adding a prefix indicating that the reply short message corresponding to the present short message is paid by the receiver of the reply short message in the message content.

In this embodiment, the detailed method for the present short message carrying the identifier indicating that the reply short message corresponding to the present short message is paid by the receiver of the reply short message includes:
using combination of the service access code identifier indicating that the reply short message corresponding to the present short message is paid by the receiver of the reply short message and the receiver number (the user B's number) as the called number.

The service access code is used to identify the short message service where the reply short message corresponding to the present short message is paid by the receiver of the reply short message. The service access code may be defined by an operator and composed by numerals.

For example, the service access code of service where the reply short message is paid by the receiver may be 801. Therefore, when the user A sends a short message of which the reply short message is paid by the receiver of the reply short message, the target address is 80113900011234, indicating that the user A sends a short message to the user B (the number of the user B is 13900011234) and if the user B replies the short message, the receiver (that is, the user A) pays for the message.

In step 302, after a short message center receives the grant short message, the short message center identifies the short message as the short message of which the reply short message is paid by the receiver of the reply short message according to the service access code in the called number, saves the present short message, and then returns an answer to the user A.

In step 303, the short message center sends the present short message to the user B according to the user B's number in the called number.

When the short message center sends the user B the present short message, the short message center may send the user B a system message to inform the user B that the user A pays for the reply short message corresponding to the present short message at the same time.

In step 304, the user B submits the reply short message corresponding to the present short message to the short message center, and uses a special number as the called number, where the special number includes the service access code and the user A's number.

In step 305, after the short message center receives the replied short message, the short message center informs deducting the charge of the reply short message from the user A according to the service access code and the user A's number

The process of informing deducting the charge of the short message from the user A is similar to the process of informing deducting the charge of the short message in the prior art, and thus further descriptions are not made herein again.

The preceding method for implementing dynamic payment for a message provided by the embodiment of the present invention is not only applicable to the short message but also applicable to a multimedia message. When applying to the multimedia message, a processing of a multimedia message center is similar to the processing of the short message center of the embodiment in the present invention, and thus the details are not repeated herein again.

Moreover, the implementation for the multimedia message center informing the user B that the user A pays for replying the present multimedia message has the following two methods:
1. the present multimedia message sent by the multimedia message center to the user B carries the system message informing the user B that the user A pays for replying the present multimedia message; and
2. the multimedia informing message sent by the multimedia message center to the user B carries the system message informing the user B that the user A pays for replying the present multimedia message.

In this embodiment, the specified payer is the receiver. This embodiment is also applicable to the third party as the specified payer, and the implementation process is similar, thus the details are not repeated herein again.

FIG. 4 is a structural view of a message center according to an embodiment of the present invention.

The message center includes a receiving unit 31, an identifying unit 32, a sending unit 33, and a charge deduction informing unit 34.

The receiving unit 31 is configured to receive a message, where the message carries an identifier indicating that a specified payer pays for the message.

A detailed method of carries the identifier indicating that a specified payer pays for the message includes:
using combination of a service access code, an identifier of the specified payer, and a receiver identifier as a called number; or
adding a prefix indicating that a specified payer pays for the message in the message content, and the prefix includes the identifier of the specified payer.

The service access code is used to identify a specified payer-paying short message service. The service access code may be defined by an operator and composed by numerals.

The specified payer may be a receiver or a third party.

For example, the receiver-paying service access code may be 800. Therefore, when the user A sends a short message paid by the receiver, the called number is 80013900011234, indicating that the short message sent to the user B (the number of the user B is 13900011234) is paid by the receiver (that is, the user B).

For example, the third party-paying service access code may be 801. Therefore, when the user A sends a short message paid by the third party, the called number is 80113900011234#13900015678, indicating that the short message sent to the receiver (that is, the user C, and the number of the user C is 13900011234) is paid by the third party (the third party is the user B and the number of user B is 13900015678).

The identifying unit 32 is configured to identify the message as a message paid by the specified payer according to the identifier received by the receiving unit 31.

The sending unit 33 is configured to send a message paid by the specified payer and received by the receiving unit to a receiver according to a receiver number of the message received by the receiving unit 31.

The charge deduction informing unit 34 is configured to inform deducting the charge of the sent message by the sending unit 33 from the specified payer according to the message identified by the identifying unit 32 as the message paid by the specified payer.

The message center further includes an inquiring unit 35.

The inquiring unit 35 is configured to ask whether the specified payer is willing to pay for the message according to the message paid by the specified payer identified by the identifying unit 32. If the specified payer is willing to pay for the message, the inquiring unit 35 controls the sending unit 33 to send the receiver the message, and controls the charge deduction informing unit 34 to inform deducting the charge of the message from the specified payer.

The content and format of the inquiry message may be determined by an operator and mainly includes a calling number and the charge of the short message. For example, the content of the inquiry short message may be "whether be willing to accept a short message paid by the receiver (the charge of the short message is $1) sent by the user A? Please answer 1 for agreement or 2 for disagreement (the replied short message is free)." For another example, the content of the inquiry short message may be "whether be willing to accept a short message paid by the third party (the charge of the short message is $1) sent by the user A or not? Please answer 1 for agreement or 2 for disagreement (the replied short message is free)."

The method for implementing dynamic payment for a message provided by the embodiment of the present invention is not only applicable to paying of a normal message but also applicable to paying of a multimedia message.

According to the method and the message center for implementing dynamic payment for a message provided by the embodiments of the present invention, the message center identifies a message paid by the specified payer according to the identifier carried in the message, and deducts the charge of the message from the specified payer, thus achieving dynamic payment in a message service.

Persons of ordinary skill in the art may understand that all or part of the steps of the method according to the embodiments of the present invention may be implemented by a program instructing relevant hardware. The program may be stored in a computer readable storage medium, such as a Read-Only Memory (ROM), a Random Access Memory (RAM), a magnetic disk, or an optical disk.

The method and the short message center for implementing dynamic payment for a message of the present invention are described in detail above. The principle and implementation of the present invention are described herein through specific examples. The description about the embodiments is merely provided for ease of understanding of the technical solutions disclosed by the present invention. Persons of ordinary skill in the art can make variations and modifications to the present invention in terms of the specific implementations and application scopes according to the ideas of the present invention. Therefore, the specification shall not be construed as a limit to the present invention.

## Claims

1. A method for implementing dynamic payment for a message, comprising:
receiving a message, wherein the message carries an identifier indicating that a specified payer pays for the message;
identifying the message as a message paid by a specified payer according to the identifier; and
sending the message to a receiver, and informing deducting a charge of the message from the specified payer.

2. The method for implementing dynamic payment for a message according to claim 1, wherein the message carries the identifier indicating that the specified payer pays for the message comprises:
using combination of a service access code indicating that the message needs to be paid by the specified payer, an identifier of the specified payer, and a receiver identifier as a called number of the message; or
adding a prefix indicating that the specified payer pays for the message in message content, wherein the prefix includes an identifier of the specified payer.

3. The method for implementing dynamic payment for a message according to claim 2, wherein the message paid by the specified payer is a sending message, and before the message is sent to the receiver, the method further comprises:
sending, by a message center, the specified payer an inquiry message to ask whether the specified payer is willing to pay for the message according to the identifier indicating that a specified payer pays for the message;
receiving an answer message of the inquiry message; and
sending the message carrying the identifier indicating that a specified payer pays for the message to the receiver if the answer message indicates that the specified payer is willing to pay for the message.

4. The method for implementing dynamic payment for a message according to claim 3, wherein sending the specified payer the inquiry message to ask whether the specified payer is willing to pay for the message according to the identifier indicating that a specified payer pays for the message comprises:
generating, by the message center, the inquiry message for the message paid by the specified payer according to the identifier indicating that a specified payer pays for the message, and a temporary address as a source address of the inquiry message; and
sending, by the message center, the specified payer the inquiry message by using the source address.

5. The method for implementing dynamic payment for a message according to claim 4, wherein a target address of the answer message is the temporary address generated by the message center.

6. The method for implementing dynamic payment for a message according to claim 2, wherein if the message paid by the specified payer is a reply message, before the receiving the reply message, the method further comprises:
sending the receiver a present message corresponding to the reply message, wherein the present message carries an identifier indicating that the reply message corresponding to the present message is paid by the specified payer, so as to enable the receiver of the present message to carry the identifier of the reply message paid by the specified payer when the receiver replies the present message.

7. The method for implementing dynamic payment for a message according to claim 6, wherein the present message also carries a system message to inform the receiver that the specified payer pays for the reply message corresponding to the present message.

8. The method for implementing dynamic payment for a message according to any one of claims 1 to 7, wherein the specified payer is the receiver or a third party.

9. A message center, comprising:
a receiving unit, configured to receive a message, wherein the message carries an identifier indicating that a specified payer pays for the message;
an identifying unit, configured to identify the message as a message paid by the specified payer according to the identifier received by the receiving unit;
a sending unit, configured to send a message paid by the specified payer and received by the receiving unit to a receiver according to a receiver number of the message; and
a charge deduction informing unit, configured to inform deducting the charge of the sent message by the sending unit from the specified payer according to the message identified by the identifying unit as the message paid by the specified payer.

10. The message center according to claim 9, wherein the message center further comprises:
an inquiring unit, configured to ask whether the specified payer is willing to pay for the message according to the message paid by the specified payer identified by the identifying unit; if the specified payer is willing to pay for the message, control the sending unit to send the message to the receiver and control the charge deduction informing unit to inform deducting the charge of the message from the specified payer.

11. The message center according to claim 9 or 10, wherein the specified payer is the receiver or a third party.
